# EUROPÄISCHE PATENTSCHRIFT

(11) **EP 0 431 238 B1**
(45) Veröffentlichungstag und Bekanntmachung des Hinweises auf die Patenterteilung: **06.07.1994**
(21) Anmeldenummer: 90106101.0
(22) Anmeldetag: 30.03.1990
(51) Int. Cl.: H02K 11/00, H02K 37/04, H01H 37/04

(54) **Aufnahmegehäuse für einen Thermoschutzschalter**
Housing box for a thermal protection switch
Boîtier pour le logement d'un interrupteur de protection thermique

(30) Priorität: 06.12.1989 DE 3940257
(43) Veröffentlichungstag der Anmeldung: 12.06.1991
(73) Patentinhaber: Licentia Patent-Verwaltungs-GmbH, 60596 Frankfurt (DE)
(72) Erfinder: Pöpelt, Bernhard, D-2900 Oldenburg (DE); Appeldorn, Alfred, Dipl.-Ing., D-2900 Oldenburg (DE)
(74) Vertreter: Wolf, Otto, Dr. Ing.

(56) Entgegenhaltungen:
- DE-A- 3 534 883
- DE-U- 8 631 701

## Beschreibung

Die Erfindung bezieht sich auf ein Aufnahmegehäuse für einen Thermoschutzschalter gemäß dem Oberbegriff des Anspruchs 1.

Thermoschutzschalter dieser Art werden häufig in gekapseltem Zustand in die Motorwicklung eingefügt, z.B. in eine Statornut oder in den Wickelkopf.

Durch die DE-A-35 34 883 ist eine am Ständerblechpaket eines elektrischen Kleinmotors festlegbare Kunststoffverbindungsvorrichtung bekannt, welche eine Kammer für einen Thermoschutzschalter aufweist.

Weiterhin wird durch die DE-U-86 31 701 eine Halterung für einen Temperaturschalter offenbart, welcher an einem wärmeführenden Bauteil befestigt ist.

Aus Gründen ihres relativ großen Volumens bei entsprechenden Strombelastungen im Ansprechfall sowie auch aus Kostengesichtspunkten ergab sich die Aufgabe, ungekapselte Thermoschutzschalter ohne deren Einverleiben in die Motorwicklung elektrisch isoliert in wärmeschlüssige, wieder lösbare Verbindung mit dem bewickelten Stator zu bringen.

Diese Aufgabe ist erfindungsgemäß mit einem Aufnahmegehäuse mit den kennzeichnenden Merkmalen des Anspruchs 1 gelöst.

Weiterbildungen und zweckmäßige Ausgestaltungen der Erfindung sind in den Unteransprüchen charakterisiert. Die Erfindung wid im nachstehenden anhand der Zeichnung erläutert. Es zeigen:
- Figur 1: eine Draufsicht auf das Aufnahmegehäuse mit abgeschwenktem Deckel,
- Figur 2: eine Frontansicht des Aufnahmegehäuses gemäß Figur 1,
- Figur 3: eine Ansicht des Gehäuses gemäß Figur 1 in Richtung A,
- Figur 4: eine Draufsicht auf das offene Aufnahmegehäuse mit eingesetztem Thermokontakt,
- Fig. 5: eine Draufsicht auf das an der Polpaketisolation verrastete Aufnahmegehäuse,
- Fig. 6: eine Frontansicht des Stators mit eingesetztem Aufnahmegehäuse,
- Fig. 7: ein Aufnahmegehäuse mit zwei schwalbenschwanzförmigen Ansätzen in Zuordnung zu in der Stirnseite des Stators angebrachten korrespondierenden Führungen.

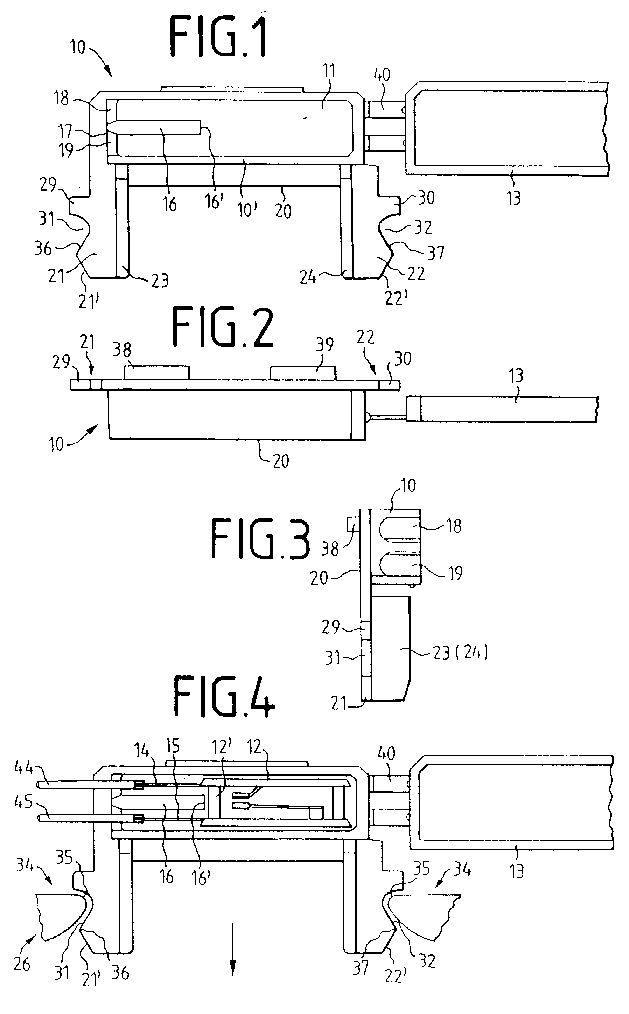

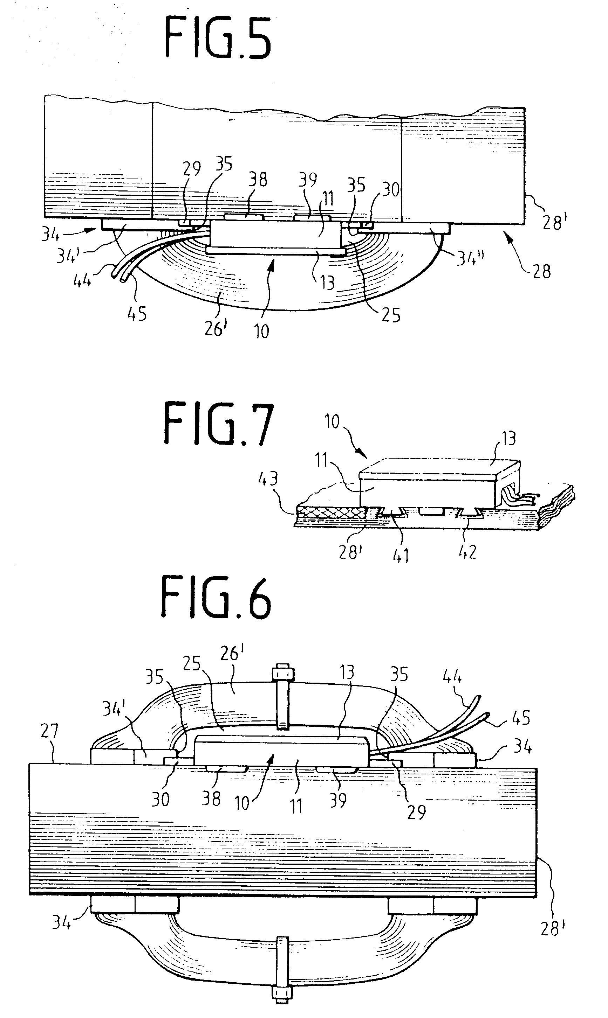

Wie aus den Figuren 1 bis 4 ersichtlich ist, weist das Aufnahmegehäuse 10 eine Kammer 11 für einen Thermosschutzkontakt 12 herkömmlicher Bauart sowie einen Deckel 13 auf. Zur elektrischen Trennung der beiden Anschlußfahnen 14,15 des Thermoschutzkontakts enthält die Kammer 11 einen Trennsteg 16, der zugleich als Axialanschlag für den Thermokontakt 12 dient, indem der eine Quersteg 12' des Thermokontakts zur Anlage an die Stirnkante 16' des Trennstegs kommt. Des weiteren weist die stegseitige Schmalseite 17 der Kammer 11 zwei Austrittsöffnungen 18 und 19 für den Austritt der Anschlußfahnen 14 und 15 des Thermoschutzkontakts 12 auf. Der Boden 20 des Aufnahmegehäuses 10 setzt sich einstückig über die Kammer 11 hinaus fort und geht beidseitig in einen Ausleger 21,22 über. Die Ausleger 21 und 22 erstrecken sich in Richtung senkrecht zur wickelkopfseitigen Längskante 10' des Aufnahmegehäuses weg von dieser . Von jedem der einen entsprechenden Abstand von einander aufweisenden Ausleger 21 ,22 erhebt sich eine Rippe 23,24 senkrecht nach oben, und zwar soweit, daß ihre Oberkanten, wie Figur 6 erkennen läßt, in den Zwischenraum 25 zwischen den Wickelkopf 26 und der Stirnfläche 27 des Statorblechpakets 28' passen.

Die beiden Ausleger 21 und 22 sind in ihrer Ebene, also in Richtung senkrecht zu den Rippen 23 und 24, in Grenzen elastisch verformbar.

Des weiteren weisen die als Haltearme ausgebildeten Ausleger 21 und 22 in ihrem Außenbereich einen seitlichen Vorsprung 29,30 und eine Rastausnehmung 31, 32 auf. Die Vorsprünge 29 und 30 gelangen, wie Fig. 6 zeigt, in der Endposition des den Thermoschutzschalter 12 enthaltenden Aufnahmegehäuses 10 jeweils zur Anlage an den äußeren Teil 34' der aus Abstandsgründen axial über die Stirnseiten des Statorblechpakets 28' überstehenden Polpaketisolation 34. In die Ausnehmungen 31 und 32 greift der Umlenkbereich 35 der Polpaketisolation (innerer Abschnitt 34'') ein. Der Umlenkbereich 35 wird dabei jeweils von der Hinterkante 36, 37 den Ausnehmungen 31 und 32 hintergriffen. Beim Einschieben des Aufnahmegehäuses 10 in den Zwischenraum 25 zwischen dem Wickelkopf 26' der Feldwicklung 26 und der Stirnseite des Statorblechpakets 28' weichen die Ausleger 21 und 22 um das notwendige Maß kurzzeicig nach innen aus, so daß die Umlenkbereiche 25 der Polpaketisolation 34 in die Ausnehmungen 31 und 32 eintauchen können. Danach gehen die Ausleger 21 und 22 wieder in ihre Ausgangsposition zurück und legen das Aufnahmegehäuse 10 durch Hintergreifen der Umlenkbereiche 35 der Polpaketisolation 34 fest. Damit ist eine Art Schnappverbindung realisiert, und das Aufnahmegehäuse 10 ist am Stator 28 gegen Verschieben gesichert. Die am Boden des Aufnahmegehäuses 10 angebrachten Stege 38,39 kommen bei verrastetem Aufnahmegehäuse zur Anlage an die Stirnseite des Statorblechpakets 28'.

Der Deckel 13 ist beim Ausführungsbeispiel mittels zweier Scharnierbänder 40 am Kammerteil 11 schwenkbar befestigt. zur Arretierung des Deckels 13 in seiner Schließlage ist wenigstens eine Erhebung am Deckel angebracht, die in eine zugeordnete Vertiefung im Kammerteil 11 einrastet.
Für den Fall, daß eine verschwenkbare Halterung des Deckels 13 am Kammerteil 11 z.B. aus räumlichen Gründen (z.B. Schwenkradius des Deckels) unzweckmäßig sein sollte, kann der Deckel 13 auch als völlig separates Teil ausgebildet und durch das Zusammenwirken einer Hinterschneidung und einer Rasterhebung mit dem Kammerteil 11 verrastbar sein.

Die Passung Deckel 13-Kammerteil 11 muß bzw. soll jedenfalls einen staubdichten Verschluß gewährleisten.
Figur 5 zeigt das Aufnahmegehäuse 10 (Kammer 11 und Deckel 13) in seiner Verankerungsposition am Stator 28.
Die seitlichen Vorsprünge 29, 30 der Kammer 11 liegen am äußeren Teil 34' (Kragenteil) der Polpaketisolation 34 an, und in die Ausnehmungen 31 und 32 in den Auslegern 21 und 22 greifen die Umlenkbereiche 35 der die Wicklung umschließenden Polpaketisolation 34 einrastend ein (siehe hierzu Fig. 4, Einschubrichtung siehe Pfeil). Dabei erweisen sich die in Figur 1 mit 21' und 22' bezeichneten Auflaufschrägen als vorteilhaft. Diese erleichtern das kurzzeitige Zusammendrücken der Ausleger 21 und 22 beim Einschieben des Aufnahmegehäuses in den Zwischenraum 25 zwischen dem Statorblechpaket 28' und dem Wickelkopf 26' aufgrund des durch die Umlenkbereiche 35 der die Wicklung umgebenden Polpaketisolation 34 verursachten Widerstands.

Die mit den Anschlußfahnen 14 und 15 des strom- oder wärmeabhängig schaltenden Thermoschutzschalters 12 elektrisch leitend verbundenen Anschlußleitungen sind mit 44 und 45 bezeichnet.

Wie aus Figur 7 ersichtlich ist, besteht auch die Möglichkeit, das Aufnahmegehäuse 10 bzw. dessen Kammer 11 an der Unterseite wenigstens mit einem Ansatz 41 in Form eines Querstegs zu versehen, dem eine im Statorblechpaket 28' oder, falls vorhanden, in einer Isolierendscheibe 43 angebrachte Aufnahmenut 42 zugeordnet ist, so daß das Aufnahmegehäuse mit dem Thermoschutzschalter und dem Deckel in die als Führungen dienende Aufnahmenut 42 eingeschoben werden kann. Gegebenenfalls kann sowohl im Statorblechpaket 28'als auch in einer Isolierendscheibe 43 jeweils ein Teil der Aufnahmenut 42 verlaufen.

Im Falle der Figur 7 sind zwei Ansätze 41 vorgesehen und als schwalbenschwanzförmige Querstége ausgebildet, und die Aufnahmenuten 42 sind dementsprechend ebenfalls schwalbenschwanzförmig ausgebildet. Bei einer hinreichend satten Führung der Ansätze 41 in den als Führungen dienenden Aufnahmenuten 42 erübrigt sich eine zusätzliche Sicherung gegen eine Verschiebung des Aufnahmegehäuses 10 in Achsrichtung des Statorblechpakets 28'.

Es besteht auch die Möglichkeit, eine Isolierendscheibe 43 mit integriertem Aufnahmegehäuse 10 bzw. mit integrierter Kammer 11 zu verwenden, wobei Endscheibe 43 und Gehäuse 10 bzw. Kammer 11 in einem Spritzvorgang hergestellt werden können.

Das erfindungsgemäße Aufnahmegehäuse für einen Thermoschutzschalter bringt den weiteren Vorteil mit sich, daß der Thermoschutzschalter ohne großen Montageaufwand am bewickelten Ständer mechanisch festlegbar ist, wobei die Statorwicklung getränkt oder ungetränkt sein kann.

## Patentansprüche

1. Aufnahmegehäuse (10) für einen Thermoschutzschalter, der über das Gehäuse (10) mit dem aktiven Teil einer elektrischen Maschine in wärmeschlüssige Verbindung bringbar ist und eine Signalabgabe und/oder das Abschalten des Motors bei thermischer Überbelastung bewirkt, wobei das Gehäuse (10) an dem ausgeprägte Pole aufweisenden Stator (28) befestigbar ist, **dadurch gekennzeichnet**, daß das Aufnahmegehäuse (10) derart bemessen und ausgestaltet ist, daß es im Zwischenraum (25) zwischen einem Wickelkopf (26') der Feldwicklung (26) des Stators (28) und der Stirnseite des Statorblechpaketes (28') unterbring- und in seiner Gebrauchslage festlegbar ist.

2. Aufnahmegehäuse nach Anspruch 1, **dadurch gekennzeichnet**, daß es mit elastisch nachgiebigen, einen Abstand voneinander aufweisenden Auslegern (21, 22) zur Verankerung am Wickelkopf (26') versehen ist.

3. Aufnahmegehäuse nach Anspruch 2, **dadurch gekennzeichnet**, daß die Ausleger (21, 22) als zwei sich wenigstens angenähert senkrecht von der wickelkopfseitigen Gehäuselängskante (10') weg erstreckende Haltearme ausgebildet sind, die in ihrem Außenbereich jeweils wenigstens einen zur Anlage an den äußeren Teil (34') der axial über die Statorebene überstehenden Polpaketisolation (34) gelangenden seitlichen Vorsprung (29, 30) aufweisen und mit wenigstens einer Rastausnehmung (31, 32) für die hintergreifende Aufnahme des umgelenkten inneren Bereichs (35) der Polpaketisolation (34) versehen ist.

4. Aufnahmegehäuse nach Anspruch 3, **dadurch gekennzeichnet**, daß es wenigstens mit einem am Umfang des Statorblechpakets (28') zur Anlage kommenden Steg (38, 39) versehen ist.

5. Aufnahmegehäuse nach den Ansprüchen 1 bis 4, **dadurch gekennzeichnet**, daß seine Kammer (11) mit einem Trennsteg (16) und mit Austrittsöffnungen (18, 19) für die Anschlußfahnen (14, 15) des Thermoschutzkontaktes (12) versehen ist.

6. Aufnahmegehäuse nach den Ansprüchen 1 bis 5, **dadurch gekennzeichnet**, daß es mit einem abnehmbaren Deckel (13) versehen ist.

7. Aufnahmegehäuse nach Anspruch 6, **dadurch gekennzeichnet**, daß der Deckel (13) mittels eines Scharnierbands (40) mit der Kammer (11) verbunden ist.

8. Aufnahmegehäuse nach Anspruch 6, **dadurch gekennzeichnet**, daß der Deckel (13) durch einen Schnappverschluß mit dem Gehäuse vereinigbar ist.

9. Aufnahmegehäuse nach den Ansprüchen 1 und 5, **dadurch gekennzeichnet**, daß es an seiner Unterseite mit mindestens einem schwalbenschwanzförmig ausgebildeten Ansatz (41) versehen ist, der in eine an der Stirnseite des Statorblechpakets (28') vorgesehene korrespondierende Aufnahmenut (42) einschiebbar ist.

10. Aufnahmegehäuse nach Anspruch 9, **dadurch gekennzeichnet**, daß die korrespondierende Aufnahmenut (42) in einer auf die Stirnseite des Statorblechpakets (28') aufgesetzten Isolierendscheibe (43) vorgesehen ist.

11. Aufnahmegehäuse nach Anspruch 9, **dadurch gekennzeichnet**, daß die korrespondierende Aufnahmenut (42) zum Teil in die Stirnseite des Statorblechpakets (28') und zum Teil in eine Isolierscheibe (43) eingebracht ist.

12. Aufnahmegehäuse nach einem der vorhergehenden Ansprüche, **dadurch gekennzeichnet**, daß es mindestens zum Teil Bestandteil einer auf die Stirnseite des Statorblechpakets aufgesetzten Isolierendscheibe (43) ist.

## Claims

1. Receptacle housing (10) for a thermal protector switch, which can be brought by way of the housing (10) into thermally-coupled connection with the active part of an electrical machine and effects a signal output and/or switching-off of the motor in the case of thermal overload, wherein the housing (10) is fastenable to the stator (28) having salient poles, characterised thereby that the receptacle housing (10) is so dimensioned and shaped that it can be accommodated in the intermediate space (25) between a coil end (26') of the field winding (26) of the stator (28) and the end face of the stator lamination body (28) and can be fixed in its use position.

2. Receptacle housing according to claim 1, characterised thereby that it is provided with resiliently yielding cantilever arms (21, 22), which have a spacing from each other, for the anchoring to the winding end (26').

3. Receptacle housing according to claim 1, characterised thereby that the cantilever arms (21, 22) are constructed as two retaining arms, which extend at least approximately perpendicularly away from the housing longitudinal edge (10') at the side of the winding end and which each have in their outer region at least one lateral projection (29, 30) achieving contact with the outer part (34') of the laminated-pole insulation (34) projecting axially beyond the stator plane and are provided with at least one detent recess (31, 33) for the reception, engaging behind, of the returned inner region (35) for the laminated-pole insulation (34).

4. Receptacle housing according to claim 3, characterised thereby that it is provided at least with a web (38, 39) coming into contact at the circumference of the stator lamination body (28').

5. Receptacle housing according to claims 1 to 4, characterised thereby that its chamber (11) is provided with a partition web (16) and with outlet openings (18, 19) for the connecting lugs (14, 15) of the thermal protector switch (12).

6. Receptacle housing according to claims 1 to 5, characterised thereby that it is provided with a removable lid (13).

7. Receptacle housing according to claim 6, characterised thereby that the lid (13) is connected with the chamber (11) by means of a hinge strip (40).

8. Receptacle housing according to claim 6, characterised thereby that the lid (13) is joinable to the housing by a snap closure.

9. Receptacle housing according to claims 1 and 5, characterised thereby that it is provided at its underside with at least one projection (41) which is constructed in dovetail shape and which is insertable into a corresponding reception groove (42) provided at the end face of the stator lamination body (28').

10. Receptacle housing according to claim 9, characterised thereby that the corresponding reception groove (42) is provided in an insulating washer (43) placed on the end face of the stator lamination body (28').

11. Receptacle housing according to claim 9, characterised thereby that the corresponding reception groove (42) is made partly in the end face of the stator lamination body (28') and partly in an insulating washer (43).

12. Receptacle housing according to one of the preceding claims, characterised thereby that it is at least in part a component of an insulating washer (43) placed on the end face of the stator lamination body.

## Revendications

1. Boîtier (10) pour le logement d'un interrupteur de protection thermique qui est connectable par thermodynamisme par l'intermédiaire du boîtier (10) à une partie active d'une machine électrique, et provoque l'émission d'un signal et/ou l'arrêt du moteur lors d'une surcharge thermique, le boîter (10) pouvant être fixé au stator (28) présentant des poles marqués, caractérisé en ce que le boîtier de logement (10) est dimensionné et conçu de manière à pouvoir être logé et fixé en position d'utilisation dans l'espace intermédiaire (25) entre une tête de bobine (26') de la bobine de champ (26) du stator (28) et la face frontale de l'empilage de tôles (28') du stator.

2. Boîtier de logement selon la revendication 1, caractérisé en ce qu'il est muni de bras souples (21, 22), à distance l'un de l'autre, en vue de l'ancrage à la tête de bobine (26').

3. Boîtier de logement selon la revendication 2, caractérisé en ce que les bras (21, 22) sont réalisés comme deux bras de support s'étendant en s'éloignant du bord de boîtier (10') longitudinal se trouvant du côté de la tête de bobine et, ce, au moins à peu près perpendiculairement, bras qui, dans leur zone externe, présentent chacun au moins une saillie (29, 30) venant s'appliquer contre la partie externe (34') de l'isolation par empilage de tôles polaires (34) dépassant au-dessus du plan de stator et sont munis d'au moins un cran d'arrêt (31, 32) pour l'emboîtement par l'arrière de la zone interne inversée (35) de l'isolation de l'empilage de tôles polaires (34).

4. Boîtier de logement selon la revendication 3, caractérisé en ce qu'il est muni au moins d'un pont (38, 39) venant s'appliquer à la périphérie de l'empilage de tôles de stator (28').

5. Boîtier de logement selon les revendications 1 à 4, caractérisé en ce que sa chambre (11) est munie d'un pont de séparation (16) et d'ouvertures de sortie (18, 19) pour les barrettes (14, 15) du contact de protection thermique (12).

6. Boîtier de logement selon les revendications 1 à 5, caractérisé en ce qu'il est muni d'un couvercle amovible (13).

7. Boîtier de logement selon la revendication 6, caractérisé en ce que le couvercle (13) est relié à la chambre (11) au moyen d'une bande charnière (40).

8. Boîtier de logement selon la revendication 6, caractérisé en ce que le couvercle (13) est reliable au boîtier par une fermeture à déclic.

9. Boîtier de logement selon les revendications 1 à 5, caractérisé en ce qu'il est muni, sur sa face inférieure, d'un appendice (41) en queue d'aronde, qui est insérable dans une rainure de logement (42) correspondante prévue sur la face frontale de l'empilage de tôles de stator (28').

10. Boîtier selon la revendication 9, caractérisé en ce que la rainure de logement (42) correspondante est prévue dans une tranche isolante d'extrémité (43) placée sur la face frontale de l'empilage de tôles de stator (28').

11. Boîtier selon la revendication 9, caractérisé en ce que la rainure de logement (42) correspondante est ménagée, en partie, dans la face frontale de l'empilage de tôles de stator (28') et, en partie, dans une tranche isolante (43).

12. Boîtier selon l'une des revendications précédentes, caractérisé en ce qu'il est au moins partiellement partie constituante d'une tranche isolante d'extrémité (43) placée sur la face frontale de l'empilage de tôles de stator.
